(19) **Europäisches Patentamt**
**European Patent Office**
**Office européen des brevets**

(11) **EP 1 818 655 A1**

(12) **EUROPEAN PATENT APPLICATION**

(43) Date of publication:
**15.08.2007 Bulletin 2007/33**

(51) Int Cl.:
**G01F 23/296** (2006.01)

(21) Application number: **07101349.4**

(22) Date of filing: **29.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **09.02.2006 US 350535**

(71) Applicant: **Alcon, Inc.**
**6331 Hünenberg (CH)**

(72) Inventor: **Gao, Shawn X.**
**Irvine, CA 92620 (US)**

(74) Representative: **Hanna, Peter William Derek et al**
**Hanna, Moore & Curley**
**13 Lower Lad Lane**
**Dublin 2 (IE)**

(54) **Acoustic Fluid Level Sensor**

(57)    An acoustic fluid level sensor is provided for use in a chamber, such as a chamber (12) contained in a surgical cassette (16) adapted to be placed in a surgical console (18). The sensor has an ultrasound transducer (14) mounted on the outside of the bottom (15) of the fluid chamber (12) and is acoustically coupled to the chamber by an acoustic coupling material (20). The transducer sends a pulse ultrasound signal (34) through the chamber and any liquid (30) in the chamber. A signal (36) is reflected back by the air/liquid interface (32) and captured by the transducer. The time required for the signal to travel to and from the transducer will vary with the amount of fluid in the chamber and is indicative of the level of fluid in the chamber.

FIG. 2

EP 1 818 655 A1

**Description**

Background of the Invention

The present invention relates to an apparatus for sensing the level of fluid within a surgical cassette that is one component of an ophthalmic surgical instrument.

Conventional ophthalmic surgical instrument systems use vacuum to aspirate the surgical site and positive pressure to irrigate the site. Typically, a cassette is serially connected between the means used to generate pressure and the surgical instrument. The use of cassettes with surgical instruments to help manage irrigation and aspiration flows at a surgical site is well known. U.S. Pat. Nos. 4,493,695 and 4,627,833 (Cook), 4,395,258 (Wang, et al.), 4,713,051 (Steppe, et al.), 4,78,580 (DeMeo, et al.), 4,758,238, 4,790,816 (Sundblom, et al.), and 5,267,956, 5,364,342 (Beuchat) and 5,747,824 (Jung, et al.) all disclose ophthalmic surgical cassettes with or without tubes, and they are incorporated in their entirety by this reference. Aspiration fluid flow rate, pump speed, vacuum level, irrigation fluid pressure, and irrigation fluid flow rate are some of the parameters that require precise control during ophthalmic surgery.

For aspiration instruments, the air pressure in the cassette is below atmospheric pressure, and fluid within the cassette has been removed from the surgical site. For irrigation instruments, the air pressure in the cassette is higher than atmospheric pressure, and the fluid will be transported to the surgical site. In both types of instruments, the cassette acts as a reservoir for the fluid that buffers variations caused by the pressure generation means.

For the cassette to act as an effective reservoir, the level of fluid (and thus the empty volume) within the cassette must be controlled so that the cassette is neither completely filled nor emptied. If fluid fills the cassette in an aspiration system, fluid may be drawn into the means for generating vacuum (typically a venturi), which would unacceptably interfere with the vacuum level at the surgical instrument. An empty cassette in an aspiration system will result in air being pumped into the drain bag, which would waste valuable reservoir space within the bag. Moreover, constant volume within the cassette in an aspiration system enables more precise control of the level of vacuum within the surgical instrument. Control of the fluid level within cassettes of irrigation systems is similarly desirable.

Additionally, the size of the reservoir within the cassette affect the response time of the cassette. A larger reservoir provides more storage capacity but slows the response time of the system. A smaller reservoir increases the response time of the system, but may not have adequate storage capacity. This dilemma has been addressed by cassettes have two internal reservoirs. Such a cassette is illustrated in U.S. Patent No. 4,758,238 (Sundblom, et al.) (the "Sundblom Cassette"). The smaller reservoir is in direct fluid communication with the surgical handpiece while a larger reservoir is positioned between the smaller reservoir and the source of vacuum. This allows for a faster response time and larger storage capacity. The smaller reservoir, however, must be periodically emptied into the larger reservoir prior to the smaller reservoir filling up. This requires that the smaller reservoir contain a fluid level sensor that notifies the control console to empty the smaller reservoir at the appropriate time. The Sundblom Cassette uses two electrical probes 76 (see FIG. 8) that form an open electrical alarm circuit. When the surgical fluid (which is electrically conductive) fills small reservoir 30, both probes 76 are submersed in the fluid, thereby closing the circuit and triggering the alarm that reservoir 30 is full. The fluid level sensor used in the Sundblom cassette has the limitation of being a simple "On/Off" switch. The sensor has no other function other than to trigger a "reservoir full" alarm and provides no other information to the user about the amount of fluid in the small reservoir.

Other level sensors, such at the one disclosed in U.S. Patent No. 5,747,824 (Jung, et al.) use an optical device for continuous fluid level sensing by reading the location of the air/fluid interface. These optical devices require relatively expensive phototransmitters and receivers and are subject to inaccuracies due to foaming of the fluid within the reservoir. In addition, the accuracy of optical level sensors can be affected by ambient light levels.

Acoustic pressure sensors have been used in the past to monitor the fluid level in water tanks. The ultrasound transducers are mounted within the tank at the top of the tank and an ultrasound signal is send downward toward the top of the water contained within the tank. This arrangement, however, is not suitable for use with surgical equipment where sterility is important and the transducer cannot be allowed to come into contact with the fluid. In addition, as surgical devices generally are disposable, locating the transducer within the chamber is undesirable.

Accordingly, a need continues to exist for a simple, reliable and accurate fluid level sensor.

Brief Description of the Invention

The present invention improves upon the prior art by providing an acoustic fluid level sensor for use in a chamber contained in a surgical cassette. The sensor has an ultrasound transducer mounted on the outside of the bottom of a fluid chamber and is acoustically coupled to the chamber. The transducer sends a pulse ultrasound signal through the chamber and any liquid in the chamber. The signal is reflected back by the air/liquid interface and captured by the transducer. The time required for the signal to travel to and from the transducer will vary with the amount of fluid in the chamber and is indicative of the level of fluid in the chamber.

Accordingly, one objective of the present invention is to provide a fluid level sensor.

Another objective of the present invention is to provide a simple, reliable fluid level sensor.

Yet another objective of the present invention is to provide a sensor that continuously measures fluid level.

Yet another objective of the present invention is to provide a non-optical fluid level sensor.

Still another objective of the present invention is to provide an acoustic fluid level sensor.

Still another objective of the present invention is to provide a fluid level sensor that uses an ultrasound transducer.

These and other advantages and objectives of the present invention will become apparent from the detailed description, drawings and claims that follow.

Brief Description of the Drawings

FIG. 1 is a schematic representation of a surgical cassette and console employing the fluid level sensor of the present invention.

FIG. 2 is a schematic representation of the fluid level sensor of the present invention in operative association with a fluid chamber containing a fluid.

Detailed Description of the Preferred Embodiments

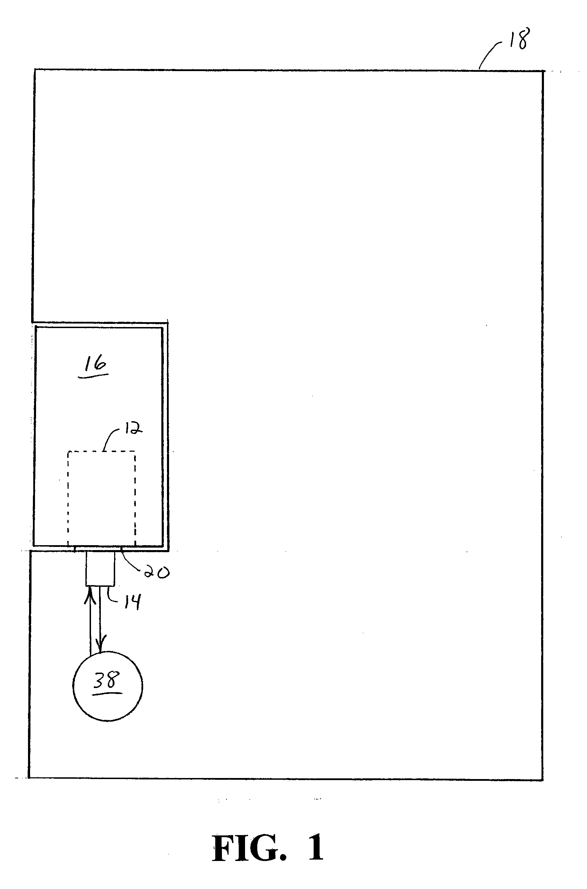

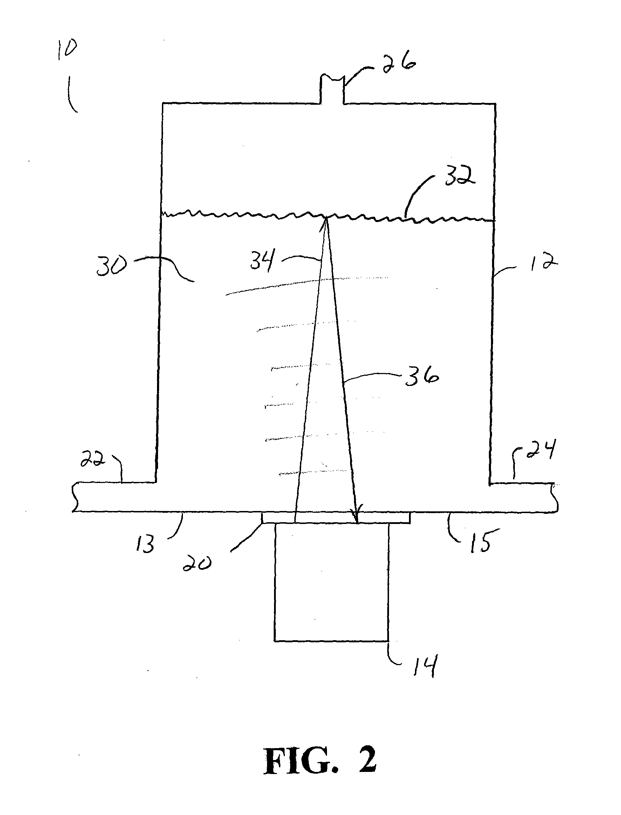

As best seen in FIGS. 1 and 2, fluid level sensor 10 of the present invention generally includes fluid chamber 12, acoustic or ultrasound transducer 14. Chamber 12 forms part of cassette 16 and transducer 14 is mounted within surgical console 18 in close proximity to cassette 16 when cassette 16 is mounted within console 18. Contained on cassette 16 or on transducer 14 is acoustic coupling material 20, such as a high water content hydrogel. Coupling material 20 acoustically couples transducer 14 to chamber 12. Chamber 12 also contains fluid inlet 22, fluid outlet 24 and port 26, for providing a source of vacuum or pressure to chamber 12. The flow of fluid through inlet 22, outlet 24 and the amount of vacuum provided through port 26 to chamber 12 is under the control of console 18, such irrigation/ aspiration and vacuum/pressure systems being well-known in the art.

In use, cassette 16 is installed in console 18 so that acoustic material 20 acoustically connects transducer 14 with chamber 12. Transducer 14 is not contained within chamber 12, but is acoustically coupled to exterior 13 of chamber 12 at bottom 15 of chamber 12 and faces up into chamber 12. Surgical fluid 30 is allowed to flow into chamber 12 through inlet 22 and is drawn out of chamber 12 though outlet 24, causing air/fluid interface 32 to rise and fall. Transducer 14, under the control of computer 38, transmits signal 34, preferably a pulsed ultrasound signal that travels upward through fluid 30 and is reflected off of air/fluid interface 32 as reflected signal or echo 36. Echo 36 travels back downward through fluid 30 and is detected by transducer 14 and that information is transmitted back to computer 38 using hardware and software well-known to those in the art. Computer 38 records the total amount of time between the emission of signal 34 and the reception of echo 36 (echo arrival time) as $t_{echo}$. With this information, the location of air/fluid interface 32 or the level of fluid 30 in chamber 12 can be calculated using the following equation:

$$\text{Level} = (V_{sound} * t_{echo})/2 \tag{1}$$

Where $V_{sound}$ is the velocity of sound in fluid 30.

Of course, the value of $V_{sound}$ will vary with the fluid, but in surgical systems, the fluid generally is a saline solution having relatively consistent properties. Therefore, $V_{sound}$ can be preprogrammed into computer 38 with high accuracy.

This description is given for purposes of illustration and explanation. It will be apparent to those skilled in the relevant art that modifications may be made to the invention as herein described without departing from its scope or spirit.

**Claims**

1.   A fluid level sensor (10), comprising:

a) a fluid chamber (12) having an exterior (13), a bottom (15), an inlet (22) and an outlet (24);

b) an acoustic transducer (14) adapted to be acoustically coupled to the exterior bottom (15) of the fluid chamber facing upward into the chamber, the transducer capable of transmitting and receiving an acoustic signal through a fluid contained in the chamber; and

c) a computer (38) configured to process the signals (34,36) transmitted and received by the transducer and to calculate a level of fluid contained within the chamber based on the transmitted and received signals.

2. The fluid level sensor of claim 1, wherein the chamber (12) is located within a surgical cassette (16) and the transducer (14) is located within a surgical console (18), such that the chamber and the transducer are adapted to become acoustically coupled when the cassette is installed within the console.

3. The fluid level sensor of claim 2, wherein the transmitted and received signals vary as a function of the level of fluid in the chamber.

4. The fluid level sensor of any one of claims 1 to 3, wherein the transmitted signal (34) is a pulsed ultrasound signal.

5. The fluid level sensor of any one of claims 1 to 4, wherein the transducer (14) and the chamber (12) are acoustically coupled by an acoustic material (20) contained on the exterior of the chamber (12).

6. The fluid level sensor of any one of claims 1 to 4, wherein the transducer (14) and the chamber (12) are acoustically coupled by an acoustic material (20) contained on the exterior of the transducer (14).

7. A method of generating a control signal indicative of a level of fluid in a chamber (12), the method comprising the steps of:

a) providing a fluid chamber (12) having an exterior (13), a bottom (15), an inlet (22) and an outlet (24);
b) acoustically coupling an ultrasound transducer (14) to the exterior bottom (15) of the chamber;
c) introducing a fluid (30) into the chamber through the inlet (22);
d) transmitting an acoustic signal (34) upward through the fluid so that the signal is reflected off of an air/fluid interface (32) in the fluid as an echo signal (36); and
e) calculating a level of fluid in the chamber based on an echo arrival time.

**FIG. 1**

10

26

32

30    34    12

36

22    24

13    15

20

14

**FIG. 2**

**EP 1 818 655 A1**

<table>
<tr><td>European Patent Office</td><td>EUROPEAN SEARCH REPORT</td><td>Application Number<br>EP 07 10 1349</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 109 934 A (VITALMETRICS INC) 8 June 1983 (1983-06-08) * the whole document * | 1-7 | INV. G01F23/296 |

TECHNICAL FIELDS SEARCHED (IPC)

G01F

The present search report has been drawn up for all claims

| Place of search | Date of completion of the search | Examiner |
|---|---|---|
| Munich | 27 March 2007 | Roetsch, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 1349

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2007

| Patent document cited in search report | | Publication date | Patent family member(s) | | Publication date |
|---|---|---|---|---|---|
| GB 2109934 | A | 08-06-1983 | CA | 1188786 A1 | 11-06-1985 |
| | | | DE | 3240191 A1 | 07-07-1983 |
| | | | JP | 1666053 C | 29-05-1992 |
| | | | JP | 3026044 B | 09-04-1991 |
| | | | JP | 58130026 A | 03-08-1983 |
| | | | US | 4448207 A | 15-05-1984 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4493695 A
- US 4627833 A, Cook
- US 4395258 A, Wang
- US 4713051 A, Steppe
- US 478580 A, DeMeo
- US 4758238 A
- US 4790816 A, Sundblom
- US 5267956 A
- US 5364342 A, Beuchat
- US 5747824 A, Jung